# EUROPEAN PATENT APPLICATION

(11) **EP 2 851 318 A1**
(43) Date of publication of application: **25.03.2015**
(21) Application number: 14185101.4
(22) Date of filing: 17.09.2014
(51) Int. Cl.: B65F 1/14

(54) **System for handling dry waste**

(30) Priority: 17.09.2013 SE 1351064
(71) Applicant: Uson Marine AB, 164 06 Kista (SE)
(72) Inventor: Rudling, Claes, 112 65 Stockholm (SE)
(74) Representative: Bergström, Johan Erik

(57) **Abstract**

The present invention relates to a system for handling dry waste, comprising an enclosure (10) capable of housing a number of waste receptacles (12), a number of access mechanisms (20) in said enclosure (10) for accessing said waste receptacles (12), a shredder (26) capable of shredding waste entered through said access mechanisms (20) and a compactor (42) capable of compacting waste entered through said access mechanisms (20). The system further comprises a handling mechanism (32, 34, 36 40; 46, 48, 50) capable of handling and positioning said shredder (26) as well as said compactor (42) in relation to said access mechanisms (20) and said waste receptacles (12) for working on waste entered through said access mechanisms (20).

## Description

### TECHNICAL AREA

The present invention relates to a handling system for dry waste, and in particular the handling of different waste fractions.

### BACKGROUND OF INVENTION

During a number of years, there has been an increased focus on the handling of dry waste and in particular how to separate and handle different fractions of dry waste, and in particular from households. One of the main reasons for separation is that it allows for energy recovery. The dry waste may comprise a number of different fractions, such as e.g. plastic in general, plastic bottles, newspapers, carton and well paper, glass, metal in general, metal cans, just to mention a few.

In some environments and for some applications, large containers are placed in public places, such as near shopping malls, so called recycling centrals. The environmentally conscious people can there throw away packages of different fractions, where one container often is used for each fraction.

A clear drawback with this solution is that often the waste that is thrown away is rather bulky and not very compacted, and therefore the containers become full more quickly than they are emptied, thus leading to waste being placed next to the containers, in turn leading to waste being blown around and causing general fouling of the area. Further, the waste disposal stations as such are rather ugly, and there is often a resistance by locals when the community wants to put up a recycling central. For commercial use, specially designed compacting containers are used. The waste in the compacting containers are subjected to pressing forces for reducing the size of the waste. However, often the pressing force does not exceed 50% per area unit, which is not optimum for reducing the size. For some applications where it is difficult to control the collecting and exchange of the container when it is full, such as on off-shore installations where such waste containers are exchanged at fixed intervals, regardless if the container is full or not.

One solution to this is disclosed in the document US 5,638,747. It comprises a number of rubbish bins placed in rows in a compartment that could be a sort of housing. Each rubbish bin is intended for a certain waste fraction and there are openable panels on the compartment for accessing the rubbish bins when waste is to be thrown away. In order to reduce the volume of waste in the rubbish bins a compacter is arranged movable along the rows of rubbish bins, where the compactor may be positioned above the respective bins for exerting a compacting pressure on the waste.

One drawback with this system is that some waste is not suitable for compacting, or at least the compactor is not capable of reducing the volume to any substantial amount. This is for example the case with plastic bottles, like PET bottles, that are very resilient. Further, if the compactor is working with a rubbish bin having one fraction, the panel is locked in order to avoid injuries. Thus no waste of that fraction may be thrown during the work of the compactor.

Other applications and areas of waste management are on off-shore installations. In this respect it should be noted that off-shore installations comprises off-shore platforms, floating or fixed, oil and/or gas rigs, drill ships and other vessels and designs used for the off-shore industry. On off-shore installations, certain specific demands need to be fulfilled. These platforms are in fact smaller cities, where the workers produce a lot of waste that need to be handled. Since everything has to be transported to and from the platforms by ship, a waste system has to be arranged to be handled efficiently by cranes on the platforms. A common solution is therefore to utilize dedicated waste containers that are shipped empty to the off-shore installations, which are loaded with the waste to be shipped from the platform.

Again, the waste may be rather bulky and generally not very compacted, filling a container rather quickly. Thus, the main weight is the container itself, whereby it is not very efficient to handle a large and heavy container with some waste. Therefore, tests have been carried out to use shredders and compactors together with receptacles. The receptacles are moved manually from a waste loading place, that could be the interior of a container, to the shredder and/or the compactor, where the waste is treated.

The drawback with this solution is that it requires quite a lot of manual handling of equipment that require education and implemented procedures for the waste sorting to be efficient. Further, the manual moving of waste receptacles on an oil platform in heavy weather is also not optimal from a handling as well as a safety point of view. Further, the containers need to be weather protected, so as to avoid that material absorb water and moist.

Thus, there is a need for solutions that can handle dry waste in an efficient manner without the need for manual handling to any larger extent.

### BRIEF DESCRIPTION OF INVENTION

The aim of the present invention is to remedy the drawbacks of the state of the art solutions.

This aim is obtained by a system for handling dry waste according to the features of the independent patent claim. Preferable embodiments of the invention form the subject of the dependent patent claims.

The present invention relates to a system for handling dry waste. It may comprise an enclosure capable of housing a number of waste receptacles. Preferably the enclosure is designed such as to fit in and be adapted to the environment where it is to be placed. If the environment is an urban area then the enclosure is preferably of a design blending in in that area. On the other hand if the environment is an offshore or marine platform, then the enclosure should be designed to be easily lifted onto and secured to the platform, while withstanding the often hard weather conditions.

According to the invention, the enclosure may comprise a number of access mechanisms in said enclosure for accessing said waste receptacles. These access mechanisms may comprise lids, doors and the like apart from additional features, which will be described.

The system may also comprise a shredder capable of shredding waste entered through said access mechanisms as well as a compactor capable of compacting waste entered through said access members. With this solution, the dry waste may be treated by both shredding and compacting, which greatly reduces the volume of the waste in comparison to the use of only one of them. Further, because the system comprises both a shredder and a compactor, waste that are not compacted so easily, may still be reduced by shredding. On the other hand, waste that is not shredded so easily, may still be reduced by compacting.

According to a preferable embodiment of the invention, it comprises a handling mechanism capable of handling and positioning said compactor as well as said shredder in relation to said access mechanism and said waste receptacle for working on waste entered through said access members. In this manner a lesser number of shredders and compactors are needed for handling different fractions in the different waste receptacles. When a certain fraction of waste is to be treated by shredding and/or compacting, the shredder and/or compactor is moved to the position requested.

According to another preferable solution, said access mechanisms comprise an intermediate storage member, capable of holding and storing waste entered through said access member. The use of an intermediate storage member enables the throwing of waste at any time even if the shredder and or the compactor is not in the right position at the access mechanism used for throwing the waste.

Preferably the system further comprises control means capable of activating said intermediate storage member to move the waste to said shredder when said shredder is in a predetermined position by said handling mechanism. Thus, the control means is capable of handling the intermediate storage member in a way to ensure that waste on the intermediate member is moved therefrom only when the shredder is in the right position to receive and treat the waste. However, for waste that only need compacting, then waste on the intermediate member may be emptied directly into the receptacle below. In this respect, the system receives information regarding if a receptacle is in place or has been removed for emptying. Thus, the intermediate is only emptied if a receptacle is in place below.

According to a favourable solution, said handling mechanism comprises at least one carriage capable of holding said shredder and said compactor, and guide means arranged to guide said at least one carriage during handling and positioning. In this manner the shredder and the compactor may be easily moved to different positions.

In order to be able to move the shredder and the compactor independently of each other, said shredder and said compactor is arranged with a carriage each and that one guide means is arranged for each carriage.

In that respect, a preferable solution is then to arrange said two guide means parallel to each other, where the guide means for the shredder is arranged adjacent the access mechanisms. This design facilitates the steps of first shredding the waste and then compacting the waste, since the waste is treated by the shredder before entering the receptacle and the compactor treats the waste after entering the receptacle.

When the shredder is arranged adjacent the access mechanisms and the compactor further away, it is preferable if the system further comprises waste receptacle handling means capable of moving each of said waste receptacle from a first position adjacent the access mechanism and said shredder to a second position adjacent the guide means for said compactor.

In order to have the most efficient system, it may preferably further comprise a control system capable of handling the system automatically, wherein the control system may comprise any of a number of drive motors, transmissions, piston/cylinders, sensors, lock members and the like.

According to a very favourable solution according to the invention, said waste receptacle comprises flexible bags or containers, where the flexible bags preferably are arranged closable and are arranged with lifting members. In this manner, the conventional hard receptacles on wheels, often being open at the top, may be omitted. Instead the softer and more easily storable flexible bags can be used. however, the softer bags may of course also be used together with the conventional receptacles, where the bags are placed inside the receptacles. The solution with flexible bags is particularly suitable for offshore use because the bags filled with different fractions of dry waste may be loaded into conventional cargo containers that are used for supplying the offshore platforms with supplies of many types. Instead of sending these containers back empty after unloading the supplies, they may be filled with the bags containing waste.

These and other aspects of, and advantages with, the present invention will become apparent from the following detailed description of the invention and from the accompanying drawings.

### BRIEF DESCRIPTION OF DRAWINGS

In the following detailed description of the invention, reference will be made to the accompanying drawings, of which
Fig. 1 is a schematic side view of an enclosure according to the invention comprising a system for handling dry waste,
Fig. 2 is a schematic side view inside the enclosure of Fig. 1 displaying a shredder utilised in the present invention,
Fig. 3 is a schematic side view inside the enclosure of Fig. 1 displaying a compactor utilised in the present invention,
Fig. 4 is a schematic view from above inside the enclosure of Fig. 1,
Figs. 5-8 show schematically different alternatives of a second embodiment of the present invention.

### DETAILED DESCRIPTION OF THE INVENTION

The present invention relates to a system for handling solid waste of different fractions. The system shown in the drawings is only to be regarded as one feasible non-limiting example and it is to be understood that the system according to the invention may be modified in many ways without departing from the scope of the inventive idea.

The system preferably comprises a suitable enclosure or housing 10. Depending on the application and area of use, the housing may have many different forms and shapes where the main purpose of the housing is to protect the interior mechanism from the environment in order to ensure a proper function and protect users from being injured by the interior mechanism. For example, the housing may be designed as a small house or a shed if the system is to be used in town areas in order to blend in with surrounding buildings. Another example is marine application, on for example an offshore platform. Then the housing could preferably be a cargo container, having means for loading the housing onto the platform and securing it safely.

According to a preferable solution, the housing is arranged to house a number of suitable receptacles 12 for solid waste. The receptacles may be of a number of different designs and solutions depending on the application. For example, the receptacles may have a tubular shape, rectangular, circular or the like, in configuration with a bottom wall and open upwards. They may be provided with wheels 14 or the like members for facilitating movement of the receptacles as will be described. Further, the receptacles 12 may be provided with handles 15 and grip means 16 so that they may be moved around manually or automatically and also lifted, by for example a lifting mechanism of a garbage truck, for emptying the receptacles.

According to a preferable solution of the invention, a number or receptacles may be placed in the housing next to each other along a first wall 18 of the housing. This first wall of the housing is preferably arranged with a number of openings or passages 20, comprised in an access mechanism, the number preferably corresponding to the number of receptacles along the first wall. The openings are further placed at a certain height above the upper edge of the receptacles.

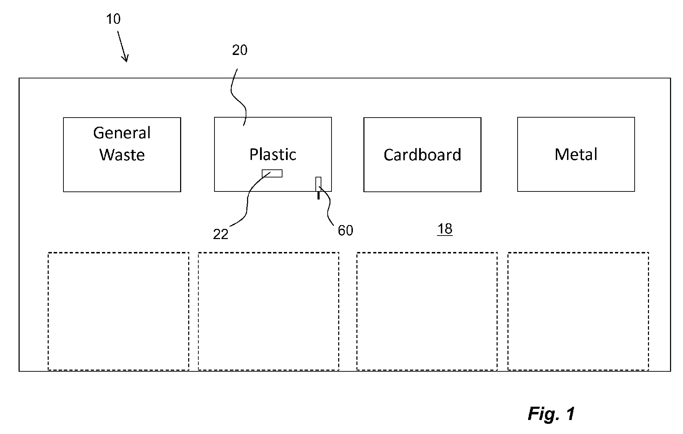

The openings are further provided with suitable shutter members 20, also comprised in the access mechanism, that can cover the openings. The shutter members may comprise hinged lids or doors, sliding doors or panels and the like, providing a closing and opening function for the openings. The shutter members are in that aspect preferably provided with suitable handles or grip members 22 for a user to operate the shutter members. Each opening is intended for a certain waste fraction as seen in Fig. 1, showing e.g. general waste, plastic, cardboard and metal. Also different colours may be used to indicate the different fractions.

The system further preferably comprises a number of intermediate storage members 24, each placed inside the housing and adjacent the openings. The intermediate storage member may be of any suitable kind and shape capable of holding a certain amount of solid waste that is thrown in through the passage. The intermediate storage member is preferably placed above and adjacent the opening of the receptacle. The intermediate storage member may have a number of appropriate designs capable of holding an amount of waste. For example, it may have the shape of a compartment having a bottom and sides, a bowl-shape, a flexible bag or the like.

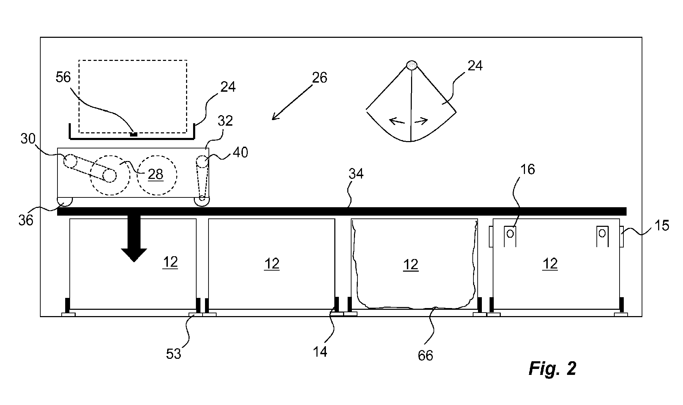

Further, the intermediate storage member 24 is movable such that solid waste placed on the intermediate storage member 24 is made to fall down into the adjacent receptacle 12, or a shredder 26 comprised in the system, upon command. There are a number of different designs that can be utilized for emptying the waste on the intermediate storage member 24 into the receptacle 12 or the shredder 26. For example, the intermediate storage member may be hingedly attached and tilted when emptied. It may further have a bottom, tray or floor that is slidable when the intermediate storage member is to be emptied. The intermediate member may further be in two halves if e.g. designed as a bowl, such as the two halves are made to move away from each other for emptying as seen in Fig. 2. It is also feasible to have the intermediate storage member provided with a pusher or scraper that is capable of moving the waste on the intermediate storage member into the adjacent receptacle or the shredder. Further, the intermediate member may be arranged with drainage means such that any liquid that may leak from the thrown waste is drained from the intermediate member so that the liquid does not enter the receptacles.

The system according to the present invention further comprises waste treatment means arranged to treat the dry waste so as to reduce the volume of the waste in the receptacles. A first waste treatment means is the shredder 26, Fig. 2, capable of grinding or chopping dry waste into smaller pieces. The shredder may be of many different designs known to the person skilled in the art. For example, the shredder may comprise shredding members 28 in the form of an elongated roll provided with cutting inserts on its outer surface, cooperating with a guide surface, where the waste to be shredded passes between the roll and the guide surface. Another type of shredder member comprises a number of discs rotatably arranged on a first shaft engaging a number of discs rotatably arranged on a second shaft. Other types of shredding members may comprise knives rotatably arranged. Suitable drive means 30 is also arranged for driving the shredding member, which may be electric, pneumatic or hydraulic.

The shredder 26 is positioned such that waste that is placed in the intermediate storage member 24 may be moved to the shredder in order to reduce the size of the waste. The shredder is further positioned such in relation to the receptacle 12 that waste treated by the shredder enters the receptacle, as seen in Fig. 2. In this respect, a number of shredders may be provided adjacent to the receptacles. However, according to a preferable solution, one shredder is provided, which is arranged movable and positionable above each of the receptacles. In order to move the shredder, it may be arranged on a carriage 32 or the like. The carriage 32 may then run on guides 34 placed above the receptacles. The guides may be of a number of different designs capable of performing the desired function. For example, the guides may be rails whereby the carriage is provided with appropriate wheels 36 that roll on the rails. Instead of rail, cylindrical elongated rods may be used. As an alternative, the carriage may be provided with slide members capable of sliding along the guides, where the slide members preferably are of a material with low friction, or that additional friction reducing material such as grease is used.

Further, appropriate drive and positioning means are provided with the movable shredder. It may comprise a number of different solutions for moving and positioning the shredder. For example, it may comprise motor 40 driving on one or more of the wheels 36. As an alternative, it may utilize a piston and cylinder, wherein the cylinder is connected to a suitable power source of pressurized air or hydraulic oil via control valves. As an alternative, the drive and positioning means may comprise a toothed rack extending along the guides, or being an integral part of the guides. A suitable cog wheel is arranged to interact with the toothed rack, which cog wheel is operably connected to a suitable drive means, such as an electric motor, e.g. a stepper motor, a pneumatic motor or a hydraulic motor.

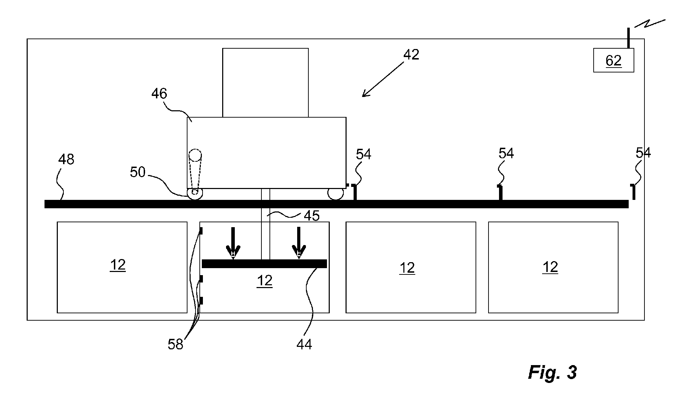

According to the present invention, it preferably comprises a second waste treatment means in the form of a compactor 42, Fig. 3, capable of compacting the dry waste. In one preferable embodiment, the compactor is capable of exerting a vertically directed pressing force with a compacting member 44 on the waste in the receptacle. In this respect, there are a number of feasible solutions of such a compactor. For example, the compacting member may be a plate or a ram 44 attached to an arm or a piston rod 45. The piston rod may in turn be movable by a pneumatic or hydraulic cylinder. The cylinder is then connected to a suitable pneumatic or hydraulic pump capable of creating pressurized medium. The piston rod may in another embodiment be arranged with a toothed rack, which is interconnected with a cog wheel of a drive motor, which motor may be electric, pneumatic or hydraulic. Further possibilities are electro-mechanical drive screws.

It is possible to arrange one compactor to each receptacle, but according to a preferable solution of the invention, one compactor 42 is used for all receptacles. In order to provide this solution, the compactor is arranged movable and positionable above each of the receptacles. The compactor may then be arranged in the same manner as the shredder with a carriage 46 that is provided with suitable guide and control means 48, 50. In that respect it is feasible that a combined shredder and compactor is arranged on the same carriage.

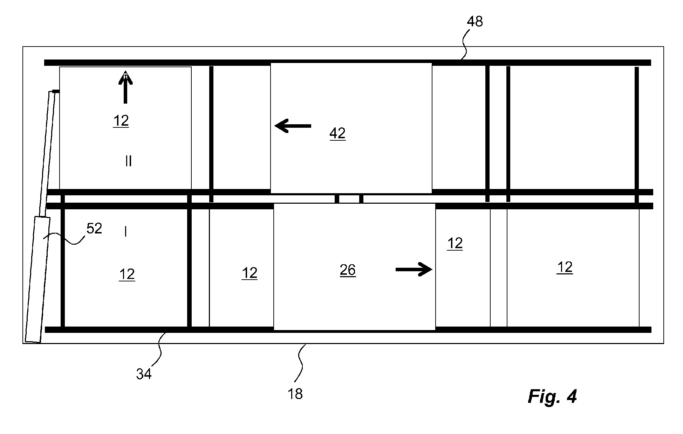

Another positive solution that is very versatile is that the guide means for the compactor is placed parallel with the guide means for the shredder as seen in Fig. 4. Further, receptacle transfer means is arranged to each receptacle, which is capable of transferring each receptacle from a first position adjacent the opening and adjacent the guide means for the shedder to a second position adjacent the guide means for the compactor. With this solution it is possible for the two waste treatment means to function independently of each other. There are also with this function a number of designs and solutions of transfer means that may be used for transferring the receptacles from one position to the other. Thus, for example, a cylinder/piston rod 52 may be attached to each receptacle, which is connected to an appropriate power source for pressurized media. Also toothed racks and cog wheels driven by appropriate motors may be used. In this respect, the receptacles 12 may preferably be arranged with wheels 14 or rollers rolling on guides 53, Fig.2, for facilitating the movement between the positions. Also slide members may be utilized. Further, the receptacles may be placed on wheeled trollies, which trollies are attached to a transfer means respectively.

In addition to the mechanics of the system, it may preferably comprise a control and monitoring system, which can ensure a proper function. For example sensors 54 may be provided for sensing and monitoring the proper position of the shredder and the compactor along the guide means. The positioning sensors may be direct, i.e. capable of sensing the actual position, or indirect, i.e. knowing the deviation from a known reference point. The direct positioning sensors may be contact sensors, proximity sensors such as magnetic sensors, capacitive or resistive sensors, just to mention a few, light sensors wherein a light beam is broken, light sensors capable of sensing reflected light in order to calculate distance/position. The indirect positioning sensors may involve obtaining data from stepper motors, transmissions or turning wheels and calculate travelled distance from a known start or reference point. These types of sensors may also be used for sensing the position of the receptacles.

The intermediate storage member is further preferably arranged with a sensor 56 capable of sensing waste put there. Sensors 58 may also be arranged in connection with the receptacles for sensing the amount of waste inside the receptacles. The sensors may comprise a number of different techniques like image sensors, IR-sensors, radar, audio and the like capable of measuring levels. The functions of these sensors will be described below. Further, the lid or door 20 may preferably be arranged with an appropriate locking means 60 for preventing access to the interior of the enclosure during certain operations that will be described. A suitable indicator or lamp may further be provided, indicating that the lid or door is locked. Further, or instead, there may be arranged user interface displays, such as LED-displays that provide information regarding type of fraction, if the system is running, how much waste that has been thrown, if a receptacle is full, date when the receptacle was changed, etc.

All sensors, drive motors, lock members and the like are preferably monitored and controlled by a suitable software computer program or programs run on an appropriate computer or controller 62, forming a control system. The control system enables an automatic function and control of the different operations and functions that the present invention can perform according to the description. For instance the movement of the shredder and compactor as well as the receptacles to different positions may be performed automatically by the control system depending on output from sensors, program sequences, user input etc.

In this respect, a PLC (program logic controller) may be used, as well as an industrial computer. However, also general PC's may be used. The software includes computer program code elements or software code portions that make the computer perform the method. The program may be stored in whole or part, on, or in, one or more suitable computer readable media or data storage means such as a magnetic disk, CD-ROM or DVD disk, hard disk, magneto-optical memory storage means, in RAM or volatile memory, in ROM or flash memory, as firmware, or on a data server. Such a computer program product can also be supplied via a network, such as Internet. The system may be run with remote control and monitoring, remote fault finding and monitoring, just to mention a few of the possibilities. The remote handling of the system enables personnel that are stationed on land to monitor equipment out on a remote location such as an off-shore installation without being physically there.

The system is intended to be used as follows. When the system is activated, the lids 20 are unlocked such that the interior is accessible. The receptacles 12 may preferably be positioned in the first position adjacent the openings, but may alternatively be in the second position. The shredder and the compactor may be positioned in any position inside the enclosure along the respective guide.

A user may now open a lid 20 in order to throw away dry waste. The lids may preferably be marked such that a user knows what type of waste can be thrown in what opening. The thrown waste enters the intermediate storage member 24, which is sensed by an associated sensor 56. Info from the sensor 56 is then processed by the control system 62 and if certain criteria are fulfilled, such as the amount of waste on the intermediate member, the shredder 26 activates to be moved in position in relation to the intermediate storage member 24 containing waste. When the proper position of the shredder has been sensed by an appropriate sensor 54, the intermediate member is activated such that the waste is moved to the shredder, where it is shredded into smaller pieces. These pieces then fall into the adjacent receptacle 12.

The above mentioned operation is performed every time waste is entered onto one or more of the intermediate storage members and the amount is above a certain amount detected by the control system. If the shredder 26 is occupied with one waste fraction when one or more waste fractions are thrown in, a working queue is set up by the control system. It is thus possible to throw waste even when the shredder is working. The only instant when a door may be locked is when the intermediate member is activated for moving waste to the shredder or the receptacles. During this short moment, it may not be advisable to throw in more waste. There might be an indication to a user such as from a lamp that the device is working.

When the amount of shredded waste has reached a certain filling amount in a receptacle 12, this is sensed by appropriate sensors 58 arranged to the receptacle for activating the compactor 42. The system then moves the receptacle 12 from the first position to the second position and the compactor is moved to the right position in relation to the moved receptacle. The compactor then exerts a force on the shredded waste for reducing the volume, Fig. 3. When the compactor has performed its compacting sequence, the receptacle is moved back to the first position. Due to the intermediate storage member 24, it is possible to throw in waste also during compacting when the receptacle is not in the first position.

In this respect it is to be noted that not all types or fractions of waste are suitable for shredding. Then only compacting is performed. The sensors 58 arranged to the receptacle are also capable of determining that the receptacle has become so full that it has to be emptied. The control system then sends an appropriate alarm signal to an operator. The alarm signal may be connected to many alarm devices or functions. In its most simple form, the alarm may be a lamp that is lit by the signal. The lamp may be positioned visible on the outside of the enclosure, or be placed in a control room. The system may further be arranged with communication means capable of sending an alarm to remote locations and control computers, smart phones and the like communication devices.

As an additional feature the compactor may be provided with a double stroke function, where the compactor stops when a certain pressing force is reached. Then the compactor is moved up a short distance and then is forced down again, pressing the waste, which increases the compacting degree. Also, the compactor may perform a stay and hold function in which it stops in a pressing position and is held there for a certain time period. Also this function increases the compacting degree. This function may be performed for all fractions for example during nights when no waste usually is thrown into the device.

When a receptacle is to be emptied, the enclosure is opened and the receptacle is removed. In a favourable solution, a separate access door (not shown) is arranged adjacent the second position of the receptacle. As an alternative, the access door may be placed on the same side as the openings for the waste. This enables a placing of the enclosure along a wall or another object since no access is needed from that side of the enclosure.

According to a favourable solution, the receptacle is arranged with a suitable flexible bag 66 or the like storage member in which the waste is stored. The bag is preferably arranged with lifting members like slings or lifting bands attached to the bag. Further, the bag preferably is arranged with closing members so as to prevent waste from escaping the bag during transportation. The use of bags facilitates the handling of the waste in comparison to commonly used box-shaped open receptacles. For example, the bags may be stored in an ordinary supply container that is often used in off-shore applications for transporting goods to the off-shore installations. These containers are often transported back empty, but with the use of flexible bags, the containers can be loaded with waste bags that are transported back to shore for further handling.

The present invention is however not limited to the use of bags. For example, for some applications, when it is possible to position a garbage truck close to the enclosure, the receptacles may be provided with lifting and tilting means, thereby facilitating lifting and emptying the receptacle into a cargo space of the garbage truck. Further, the garbage truck may be arranged with a suitable suction system with a garbage suction hose, and where the enclosure and/or the receptacles are arranged with appropriate connection members for the suction hose. In this manner, the waste is never exposed to the environment but is transported in a closed system.

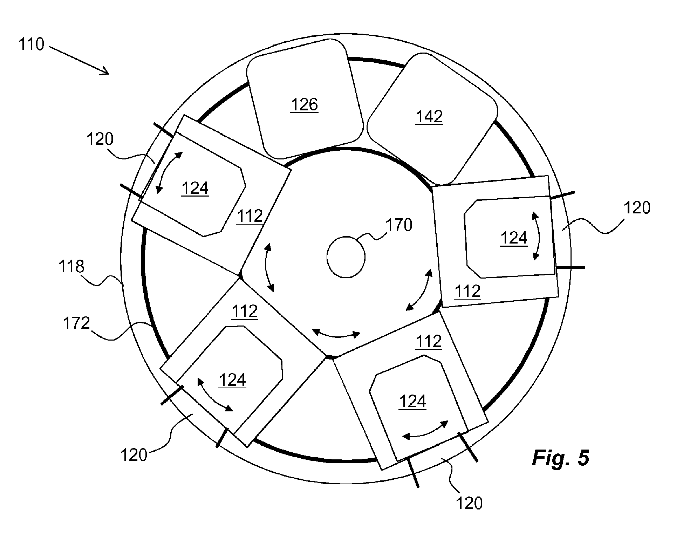

Figures 5-8 show an alternative embodiment of the present invention. Here the general design is a cylindrical enclosure or housing 110. Around the periphery of the cylindrical side wall 118 a number of 120 openings are provided with shutters or lids as described above. Inside the enclosure and positioned adjacent the side wall 118 a number of receptacles 112 are positioned. Further, intermediate storage members 124 are placed adjacent the openings 120 in the same manner as described above. A shredder 126 and a compactor 142 are placed inside the enclosure.

The embodiment may have a number of designs. For example, as shown in Fig, 5, the shredder 126 and the compactor 142 could be arranged stationary. The intermediate storage members 124 could then be arranged on a first rotatable structure having a central axis 170. The rotatable structure would also have a suitable drive means for rotating the intermediate storage members around the axis, as well as positioning means. If for example waste was thrown through an opening 120 for a certain fraction, and the control system detected that the amount of waste was such that the intermediate storage member 124 had to be emptied, the rotatable structure would then be turned such that the intermediate storage member would be placed above the shredder 126.

In this respect, also the receptacles 112 for the different fractions would be arranged on a second rotatable structure 172, that either would be interconnected or integral with the first rotatable structure, or a separately drivable structure. In any case, the receptacle 112 for the fraction to be handled by the shredder 126 is also moved to the shredder such that it is placed under the shredder. The shredder then shreds the waste in the manner described above. After the shredding operation is terminated, the second rotatable structure with the receptacle 112 is rotated so that the receptacle is placed under the compactor 142. The compactor then performs the compacting operation as described above. If the intermediate storage members are arranged on a first rotatable structure that is independent of the second rotatable structure with the receptacles, then the intermediate storage members would be moved back to the initial receiving position after emptying of the waste of the intermediate storage member into the shredder.

As an alternative to a first rotatable structure having several intermediate storage members that are all moved together when the first structure is moved, there could be a solution where each intermediate storage member has its own rotatable structure (not shown). The advantage with that solution is that the other fractions are accessible during movement of the intermediate storage member that is to be emptied. If all intermediate storage members are connected to one rotatable structure, then no access would be possible when the first rotatable structure is moved.

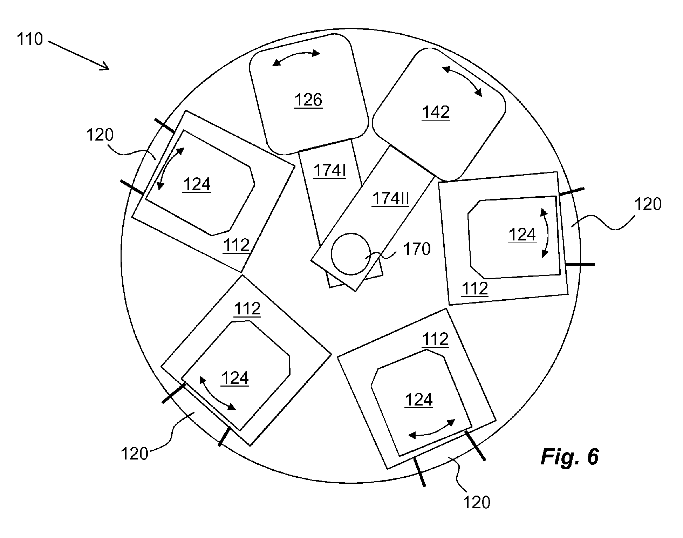

In a further alternative of the second embodiment shown in Fig. 6, the receptacles could be arranged stationary and the shredder as well as the compactor are arranged on a third rotatable structure 174. As with the previous alternative, an opening 120 for each fraction is arranged in the side wall 118 of the enclosure and an intermediate storage member 124 is positioned adjacent the opening and over each receptacle 112. Like with the first embodiment described above, the shredder is moved to a position under an intermediate storage member when the system has detected that a certain amount of waste has been thrown into the intermediate storage member. A shredding and subsequent compacting operation is then performed in the same manner as described above. In this respect, the shredder and the compactor may have individual rotatable structures so that they may be moved independently of each other 174I, 1741I.

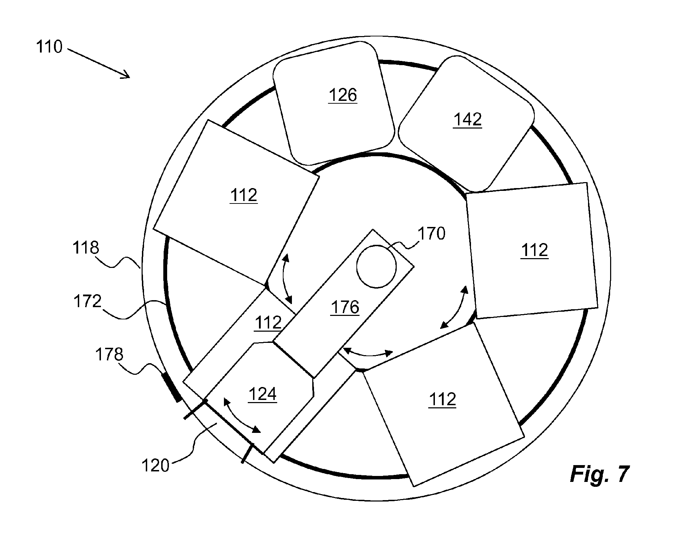

A further alternative shown in Fig. 7 is that there is only one access opening 120 and only one intermediate storage member 124, wherein all fractions are thrown into the same opening and wherein the intermediate storage member is arranged on a fourth rotatable structure 176. In order to handle the fractions in the right way and stored in the right receptacle, the control system further includes a user interface 178 adjacent the opening. The interface 178 may comprise a number of input buttons or an input keyboard as well as appropriate information display means. When throwing a certain waste fraction, the user uses the input means to inform the system what kind of fraction has been thrown. Via the display means the user is then informed what fraction he/she has chosen and that the waste will be processed. The intermediate storage member 124 is then moved to the shredder 126 by the fourth structure 176. Also the receptacle 112 that contains the actual fraction is moved to a position under the shredder by the second rotatable structure 172, after which the waste of the intermediate storage member 124 is emptied into the shredder 126 for the shredding operation. The intermediate storage member is then returned to the opening 120. During the movement of the intermediate storage member, the lid of the opening is locked. A subsequent compacting operation is subsequently performed by the compactor 142, as described above.

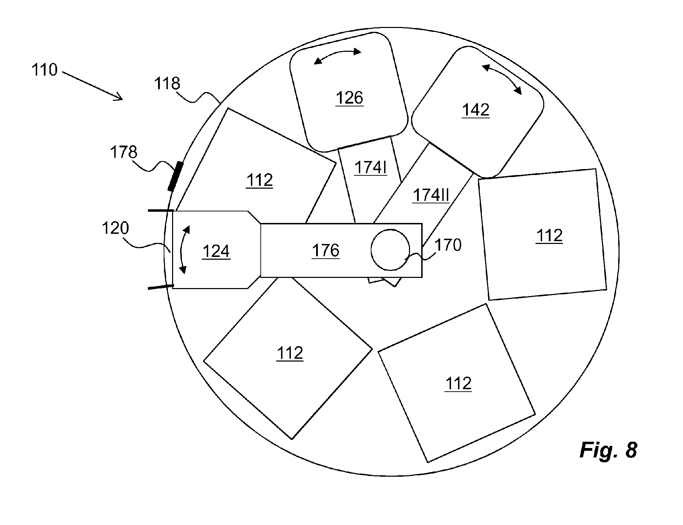

Figure 8 shows a further alternative wherein there is only one opening 120 and one intermediate storage member 124 movable with a fourth rotatable structure 176 as described above. With this alternative also the shredder and the compactor are arranged on rotatable structures 174I and 174II as described above while the receptacles 112 are stationary. As described above, the user throwing a certain fraction of waste, indicates this on the keyboard, informing the control system. The intermediate storage member 124 is then moved to the proper receptacle. The shredder 126 is also moved to the appropriate receptacle for a shredding operation as described. During the shredding operation, the intermediate storage member is returned to the opening. After the shredding operation, a subsequent compacting operation is performed in that the compactor is moved to the receptacle with the shredded waste, while the shredder is moved out of the way.

In all, a number of combinations of movable components may be varied depending on the desired function and layout of the system. For example, using only one opening may be an advantage when access to the enclosure is limited due to other buildings and structures surrounding the enclosure. However, user interaction by inputting the type of fraction, may in some instances be undesirable due to the risk of making a wrong choice, whereby different fractions may be mixed.

It is to be understood that the embodiment described above and shown in the drawings is to be regarded only as a non-limiting example of the invention and that it may be modified in many ways within the scope of the patent claims.

## Claims

1. System for handling dry waste, comprising
- an enclosure (10) capable of housing a number of waste receptacles (12),
- a number of access mechanisms (20,) in said enclosure for accessing said waste receptacles,
- a shredder (26) capable of shredding waste entered through said access mechanisms (20, 24),
- a compactor (42) capable of compacting waste entered through said access mechanism (20,24),
**characterised in** a handling mechanism (32, 34, 36, 40; 46, 48, 50) capable of handling and positioning said shredder (26) as well as said compactor (42) in relation to said access mechanism (20, 24) and said waste receptacle (12) for working on waste entered through said access members.

2. System according to claim 1, wherein said access mechanisms comprise an intermediate storage member (24), capable of holding and storing waste entered through an opening (20) comprises in said access mechanism.

3. System according to claim 2, further comprising control means (62) capable of activating said intermediate storage member (24) to move the waste to said shredder (26) when said shredder is in a predetermined position by said handling mechanism (32, 34, 36, 40).

4. System according to any of the preceding claims, wherein said handling mechanism (32, 34, 36, 40; 46, 48, 50) comprises at least one carriage (32; 46) capable of holding said shredder (26) and said compactor (42), and guide means (34, 36; 48, 50) arranged to guide said at least one carriage during handling and positioning.

5. System according to claim 4, wherein said shredder (26) and said compactor (42) is arranged with a carriage (32; 46) each and that one guide means (34; 48) is arranged for each carriage.

6. System according to claim 5, wherein said two guide means (34; 48) are arranged parallel to each other, where the guide means (34) for the shredder is arranged adjacent the access mechanisms.

7. System according to claim 6, wherein it further comprises waste receptacle handling means (50) capable of moving each of said waste receptacle (12) from a first position (I) adjacent the access mechanism and said shredder to a second position (II) adjacent the guide means for said compactor.

8. System according to any of the preceding claims, further comprising a control system (62) capable of handling the system automatically.

9. System according to claim 8, wherein said control system comprises drive motors, transmissions, piston/cylinders, sensors, lock members and the like.

10. System according to claim 9, wherein said control system further comprises a controller capable of running control software.

11. System according to any of the preceding claims, wherein said waste receptacle comprises flexible bags (66).

12. System according to claim 11, wherein said flexible bags are arranged closable and are arranged with lifting members.
